# EUROPEAN PATENT APPLICATION

(11) **EP 3 623 658 A1**
(43) Date of publication of application: **18.03.2020**
(21) Application number: 19197402.1
(22) Date of filing: 13.09.2019
(51) Int. Cl.: F16G 13/06

(54) **ROLLER CHAIN WITH IMPROVED INNER LINK PLATES**

(30) Priority: 15.09.2018 DE 102018122612
(71) Applicant: Golec, Marcin, London SW19 2RR (GB)
(72) Inventor: Golec, Marcin, London SW19 2RR (GB)
(74) Representative: Farago-Schauer, Peter Andreas

(57) **Abstract**

The present invention relates to a roller chain (100) comprising: a plurality of outer chain links (102) each having a first and a second outer link plate (106, 108); a plurality of inner chain links (104) each having a first inner link plate (10; 110) and a second inner link plate (10; 112); and a plurality of pins (114) connecting the first and second outer link plates (106, 108) to the first and second inner link plates (110, 112), wherein each inner link plate (10) comprises: a first end portion (12) having a first tubular extension (20) extending from an inner surface (18) of the inner link plate (10), the first tubular extension (20) defining at its inner side a first pin coupling conduit (26) extending through the first tubular extension (20) and the first end portion (12), the first tubular extension (20) having a first aperture (32); a second end portion (14) having a second tubular extension (21) extending from the inner surface (18) of the inner link plate (10), the second tubular extension (21) defining at its inner side a second pin coupling conduit (27) extending through the second tubular extension (21) and the second end portion (14), the second tubular extension (21) having a second aperture (31); and a connecting portion (16) interconnecting the first and second end portions (12, 14), wherein the first aperture (32) extends from a free end (24) of the first tubular extension (20) to the inner surface (18) of the inner link plate (10) and wherein the second aperture (33) extends from a free end (24) of the second tubular extension (21) to the inner surface (18) of the inner link plate (10).

## Description

### Technical Field

This disclosure relates to the field of drive chains, more particularly to the field of roller chains for a bicycle and more particularly to the field of inner links of the roller chain.

### Background

A roller chain is a chain drive that is commonly used in various types of domestic, industrial and agricultural devices. The roller chain is used for the transmission of mechanical power and consists of cylindrical rollers that are held together by side links. There are two types of side links, inner links comprising parallel and spaced apart inner plates and outer links comprising parallel and spaced apart outer plates. The inner links alternate with the outer links. In the inner links, the two inner plates are held together by two sleeves or bushings. A pair of rollers are positioned on the bushings. In the outer links, the two outer plates are held together by pins passing through the bushings of the inner links. The roller chain is driven by a sprocket or a chainring.

US20020173395A1 discloses a roller chain for bicycles having outer and inner chain links. The outer and inner chain links have outer and inner link plates, respectively. The chain links are joined by tubular pins. The chain links have holes for receiving the tubular pins.

US5741196A discloses a transmission chain, particularly for a bicycle, having inner links alternated with outer links. The inner and outer links are constituted by pairs of plates articulated to each other by means of pins. The plates of the inner links have their outer surfaces with a depressed central portion. On the inner face, each inner plate has two hubs each having a central hole for engagement of the pin. The hubs rotatably support respective rollers.

US7325391B1 discloses a bicycle chain having an outer link with two outer link plates, an inner link formed with two inner link plates and a link pin connecting adjacent outer link and inner link together. The inner link plates each have a first end portion with a first pin coupling opening, a second end portion with a second pin coupling opening, and a connecting portion interconnecting the first and second end portions of the first inner link plate. A pair of annular tubular extensions are provided around the pin coupling openings.

FR 998.484 describes a roller chain for a bicycle with rectangular recesses on tubular extensions of the link plates of the roller chain. The rectangular recesses are kept as small as possible to maintain rigidity of the roller chain and also offset by 90° in the mounted state of the roller chain to further improve rigidity of the same.

US 2007/0265124 A1 describes a roller chain intended to facilitate lubrication of the roller chain pin. To this end tubular extensions on one of the link plates in a pair of facing link plates of the roller chain has tubular extension provided with respective recesses to facilitate lubrication.

The present disclosure is directed, at least in part, to improving or overcoming one or more aspects of the prior art system. In particular, there is a need to improve the life span of the roller chain by reducing the wear on the inner link plate.

Within the object of improving life span of the roller chain by reducing wear on the inner link plate, it is a further aim of the present invention provide for a roller chain, wherein the debris in the roller chain, in particular debris accumulated at the pins of the roller chain, can be cleared, thus reducing the overall wear of the roller chain. The debris may be in the form of dirt contaminated lubricant. At the same time the present invention has the aim to provide for a better lubrication of the pin of the roller chain.

### Brief Summary of the Invention

The present invention relates to a roller chain as defined in claim 1.

Further advantageous aspects of the inner link plate of the present invention are defined in the dependent claims.

The present invention also pertains to a roller chain incorporating the above inner link plate and also to a bicycle incorporating the above inner link plate.

### Brief Description of the Drawings

The foregoing and other features and advantages of the present disclosure will be more fully understood from the following description of various embodiments, when read together with the accompanying drawings, in which:
Fig. 1 is an isometric view of a first basic embodiment of an inner link plate according to the present disclosure;
Fig. 2 is a side view of the inner link plate of Fig. 1;
Fig. 3 is a plan view of the inner link plate of Fig. 1;
Fig. 4 is a bottom view of the inner link plate of Fig. 1;
Fig. 5 is an isometric view of a second basic embodiment of an inner link plate according to the present disclosure;
Fig. 6 is a side view of the inner link plate of Fig. 5;
Fig. 7 is an isometric view of a third basic embodiment of an inner link plate according to the present disclosure;
Fig. 8 is a side view of the inner link plate of Fig. 7;
Fig. 9 is a partial exploded isometric view of a portion of a roller chain according to the present disclosure;
Fig. 10 is a partial exploded top view of the portion of the roller chain of Fig. 9;
Fig. 11 is a further partial exploded top view of the portion of the roller chain of Fig. 9;
Fig. 12 is an isometric view of the second basic embodiment inner link plates positioned together according to the present disclosure;
Fig. 13 is an isometric view of the third basic embodiment inner link plates positioned together according to the present disclosure; and
Fig. 14 is a schematic view of a chainring of a bicycle and a roller chain according to the present disclosure.

### Detailed Description

This disclosure generally relates to an inner link plate for a roller chain. The inner link plate serves to increase the lifespan of a roller chain through the reduction of wear between moving components.

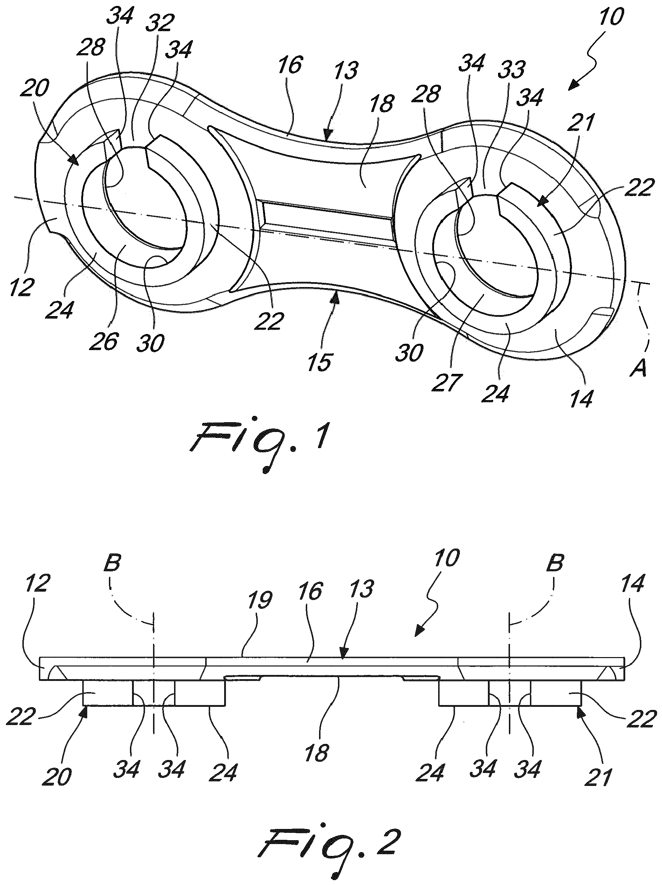

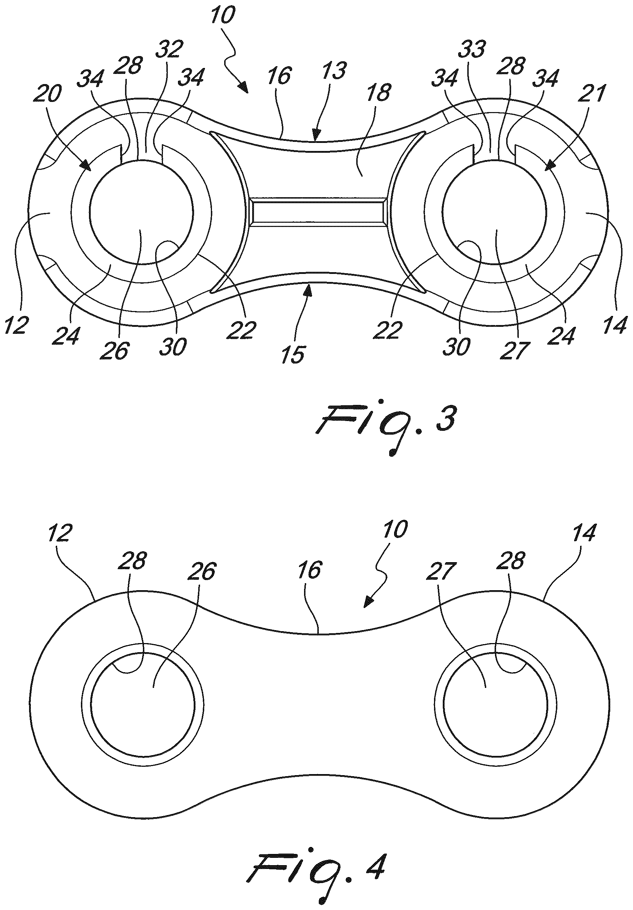

Figs. 1 to 4 illustrate an inner link plate **10.** The inner link plate **10** has a longitudinal axis **A.** Inner link plate **10** may be substantially symmetrical about the longitudinal axis **A.** The inner link plate **10** is substantially elongated along the longitudinal axis **A.** Inner link plate **10** may be substantially planar.

The inner link plate **10** comprises a first end portion **12,** a second end portion **14** and a connecting portion **16.** The connecting portion **16** interconnects the first and second end portions **12, 14.** Inner link plate **10** has an inner surface **18** and an outer surface **19.** The first and second end portions **12, 14** may be substantially rounded. The width of the first and second end portions **12, 14** may be substantially greater than the width of the connecting portion **16** relative to the transverse direction. Inner link plate **10** has a first lateral edge **13** and a second lateral edge **15.** The first lateral edge **13** extends along a side of the first and second end portions **12, 14** and the connecting portion **16.** The second lateral edge **15** extends along an opposite side of the first and second end portions **12, 14** and the connecting portion **16.**

The first end portion **12** has a first tubular extension **20.** First tubular extension **20** is centrally positioned on the first end portion **12.** The first tubular extension **20** may be concentric with the first end portion **12.** The first tubular extension **20** is positioned on the inner surface **18.** The first tubular extension **20** is comprised of an annular wall **22** that extends from the inner surface **18.** The first tubular extension **20** is substantially perpendicular to the inner surface **18.** First tubular extension **20** has a longitudinal axis **B.** First tubular extension **20** has a free end **24** opposite the end connected to the inner surface **18.** In an embodiment, the longitudinal axis **B** of the first tubular extension **20** is perpendicular to the longitudinal axis **A** of the inner link plate **10.**

The first tubular extension **20** defines at its inner side a first pin coupling conduit **26.** The first pin coupling conduit **26** extends thus along the longitudinal axis **B** of the first tubular extension **20.** First pin coupling conduit **26** extends further preferably through the first end portion **12.** The first pin coupling conduit **26** forms thus a continuous through passage to rotatably support a pin (not shown) therein. The annular wall **22** encloses the first pin coupling conduit **26.** The first pin coupling conduit **26** has a first opening **28** provided at the outer surface **19** of the first end portion **12** and a second opening **30** provided at the free end **24** of the first tubular extension **20.** The diameter of the first and second openings **28, 30** is preferably equal to the diameter of the first pin coupling conduit **26.**

The first tubular extension **20** has a first aperture **32.** First aperture **32** is a lateral opening to the first pin coupling conduit **26.** The first aperture **32** extends through the first tubular extension **20** in a direction substantially perpendicular to the longitudinal axis **B.** First aperture **32** extends from the external surface to the internal surface of the annular wall **22.** First aperture **32** is formed as a through gap in the annular wall **22.**

The first aperture **32** enables better penetration of lubricant into the first pin coupling conduit **26.** The presence of lubricant between the pin and the inner side of the first tubular extension **20,** which defines at least a part of the first pin coupling conduit **26,** reduces wear and, thereby, prolongs the life span of the inner link plate **10.** Further, the first aperture **32** provides an opening for exit of contaminants, such as lubricant contaminated with dirt, from the first pin coupling conduit **26.**

The second end portion **14** has a second tubular extension **21.** Second tubular extension **21** is centrally positioned on the second end portion **14.** The second tubular extension **21** may be concentric with the second end portion **14.** The second tubular extension **21** is positioned on the inner surface **18.** The second tubular extension **21** is comprised of an annular wall **22** that extends from the inner surface **18.** The second tubular extension **21** is substantially perpendicular to the inner surface **18.** Second tubular extension **21** has a longitudinal axis **B.** Second tubular extension **21** has a free end **24** opposite the end connected to the inner surface **18.** In an embodiment, the longitudinal axis **B** of the second tubular extension **21** is perpendicular to the longitudinal axis A of the inner link plate **10.**

The first tubular extension **20** is spaced from the second tubular extension **21.** The longitudinal axis **B** of the first tubular extension **20** is parallel to the longitudinal axis **B** of the second tubular extension **21.** The first and second tubular extensions **20, 21** may have substantially the same height. The first and second tubular extensions **20, 21** may have substantially the same diameter.

A second pin coupling conduit **27** is defined by the inner side of the second tubular extension **21.** The second pin coupling conduit **27** extends thus along the longitudinal axis **B** of the second tubular extension **21.** Second pin coupling conduit **27** further extends preferably through the second end portion **14.** The second pin coupling conduit **27** forms a continuous through passage to rotatably support a pin (not shown) therein. The annular wall **22** encloses the first second coupling conduit **27.** The second pin coupling conduit **27** has a first opening **28** provided at the outer surface **19** of the first end portion **12** and a second opening **30** provided at the free end **24** of the second tubular extension **21.** The diameter of the first and second openings **28, 30** is preferably equal to the diameter of the second pin coupling conduit **27.** The diameter of the first pin coupling conduit **26** is preferably substantially the same as the diameter of the second pin coupling conduit **27.**

The second tubular extension **21** has a second aperture **33.** Second aperture **33** is a lateral opening to the second pin coupling conduit **27.** The second aperture **33** extends through the second tubular extension **21** in a direction substantially perpendicular to the longitudinal axis **B.** Second aperture **33** extends from the external surface to the internal surface of the annular wall **22.** Second aperture **33** is formed as a through gap in the annular wall **22.**

The second aperture **33** enables better penetration of lubricant into the second pin coupling conduit **27.** The presence of lubricant between the pin and the inner side of the second tubular extension **21** reduces wear and, thereby, prolongs the life span of the inner link plate **10.** Further, the second aperture **33** provides an opening for exit of contaminants such as lubricant contaminated with dirt from the second pin coupling conduit **27.**

In some embodiments, the first aperture **32** may open towards either the first lateral edge **13** or the second lateral edge **15.** First aperture **32** may also be configured on the first tubular extension **20** so as to be directed towards either the first lateral edge **13** or the second lateral edge **15.** First aperture **32** may also be configured on the first tubular extension **20** so as to be directed towards either the first lateral edge **13** or the second lateral edge **15** of the first end portion **12.** First aperture **32** may also have a direction of opening substantially transverse to the longitudinal axis **A** of the inner link plate **10.** More preferably, the first aperture **32** extends perpendicularly to the longitudinal axis **A** of the inner link plate **10.** Most preferably, the first aperture **32** extends perpendicularly to the longitudinal axis **A** of the inner link plate **10** opening upwards when one considers the engagement of the inner link plate **10** with the top of a chainring (not shown). At any rate, the direction of opening is from the interior of the first tubular extension **20** to the exterior thereof.

In some embodiments, the first aperture **32** may open towards either ends of the inner link plate **10.** First aperture **32** may also be configured on the first tubular extension **20** so as to be directed towards either ends. First aperture **32** may also have a direction of opening substantially parallel to the longitudinal axis **A** of the inner link plate **10.** The direction of opening is from the interior of the first tubular extension **20** to the exterior thereof. The geometry of the first aperture **32** may be defined by the edges **34** of the annular wall **22.**

In some embodiments, the second aperture **33** may open towards either the first lateral edge **13** or the second lateral edge **15.** Second aperture **33** may also be configured on the second tubular extension **21** so as to be directed towards either the first lateral edge **13** or the second lateral edge **15.** Second aperture **33** may also be configured on the second tubular extension **21** so as to be directed towards either the first lateral edge **13** or the second lateral edge **15** of the second end portion **14.** Second aperture **33** has a direction of opening substantially transverse to the longitudinal axis **A** of the inner link plate **10.** More preferably, the second aperture **33** extends perpendicularly to the longitudinal axis **A** of the inner link plate **10.** Most preferably, the second aperture **33** extends perpendicularly to the longitudinal axis **A** of the inner link plate **10** opening upwards when one considers the engagement of the inner link plate **10** with the top of a chainring (not shown). At any rate, the direction of opening is from the interior of the second tubular extension **21** to the exterior thereof.

In some embodiments, the second aperture **33** may open towards either ends of the inner link plate **10.** Second aperture **33** may also be configured on the second tubular extension **21** so as to be directed towards either ends. Second aperture **33** may also have a direction of opening substantially parallel to the longitudinal axis **A** of the inner link plate **10.** The direction of opening is from the interior of the second tubular extension **21** to the exterior thereof. The geometry of the second aperture **33** may be defined by the edges **34** of the annular wall **22.**

In conceivable that the orientation of the first and second apertures **32, 33** in the above embodiments is combined in all alternative discussed above.

In particular, the first and second apertures **32, 33** may face in the same direction. In an embodiment, first and second apertures **32, 33** open towards either the first lateral edge **13** or the second lateral edge **15.** In an alternative embodiment, first and second apertures **32, 33** open towards an end of the inner link plate **10.** In yet another embodiment, the first and second apertures **32, 33** face in different directions.

Most preferably, both apertures **32, 33** face upwards when one considers the engagement of the inner link plate **10** with the top of a chainring (not shown) and further preferably both apertures **32, 33** are substantially perpendicular to the longitudinal axis **A** of the inner link plate **10.** As the tubular extensions are supposed to transfers large loads up to 5700 N arranging the apertures as above to face upwards, maximizes the transferable load.

The geometrical configurations of the first and second apertures **32, 33** may be provided in various forms. In an embodiment, the geometrical configurations of the first and second apertures **32, 33** are the same. In a preferred embodiment, first and second apertures **32, 33** face the same direction and have the same geometrical configuration. In another embodiment, first and second apertures **32, 33** face different directions and have the same geometrical configuration.

In alternative embodiments, the geometrical configurations of the first and second apertures **32, 33** are different. For example, the first aperture **32** may have a shape selected from one of the following configurations and the second aperture may have an alternate shape selected from one of the other following configurations. In further alternative embodiment, the first and second apertures **32, 33** face the same direction and have the different geometrical configurations. In yet a further alternative embodiment, the first and second apertures **32, 33** face directions and have the different geometrical configurations.

In some embodiments of the inner link plate **10,** the first aperture **32** extends from the free end **24** of the first tubular extension **20** to the inner surface **18** of the first end portion **12.** The first aperture **32** is extended along the length of the annular wall **22.** First aperture **32** extends axially relative to the longitudinal axis **B.** In an embodiment, the first aperture **32** may be substantially linear. First aperture **32** may have a rectangular shape. First aperture **32** is defined by edges **34** of the annular wall **22.** The edges **34** may be linear and mutually parallel. In an alternative embodiment, the first aperture **32** may be substantially non-linear. Edges **34** of the annular wall **22** may be non-linear.

In further embodiments of the inner link plate **10,** the second aperture **33** extends from the free end **24** of the second tubular extension **21** to the inner surface **18** of the second end portion **14.** The second aperture **33** is extended along the length of the annular wall **22.** Second aperture **33** extends axially relative to the longitudinal axis **B.** The second aperture **33** may be substantially linear. Second aperture 33 may have a rectangular shape. Second aperture 33 is defined by edges 34 of the annular wall 22. Edges 34 of the annular wall 22 may be linear and mutually parallel. In an alternative embodiment, the second aperture 33 may be substantially non-linear. Edges 34 of the annular wall 22 may be non-linear.

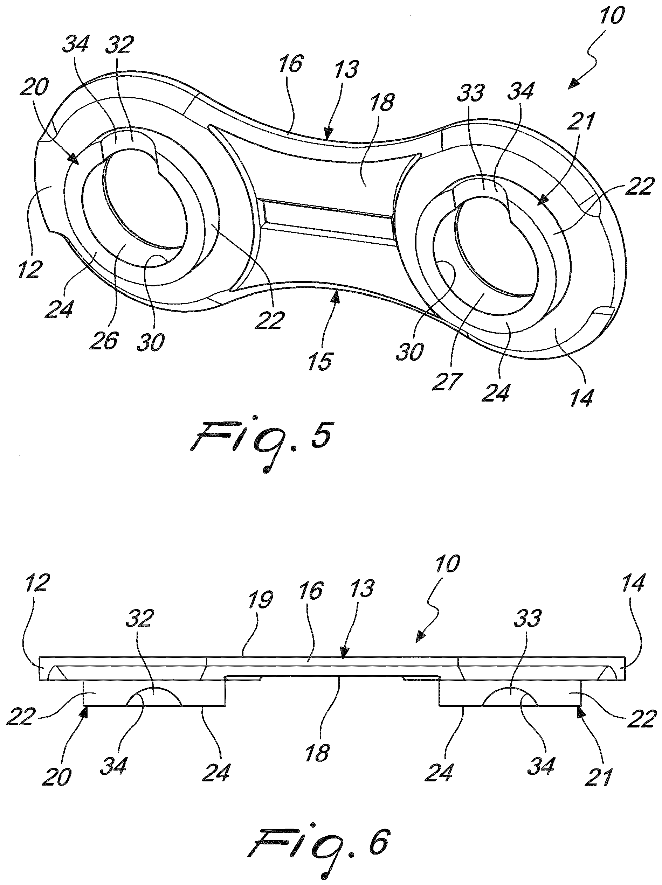

With reference to Figs. 5 and 6, in a second basic embodiment of the inner link plate 10, the first aperture 32 extends partially from the free end 24 of the first tubular extension 20 towards the inner surface 18 of the first end portion 12. The first aperture 32 is extended partially along the length of the annular wall **22.** First aperture **32** extends axially relative to the longitudinal axis **B.** The first aperture **32** may be substantially formed as a half circle. First aperture **32** is defined by edge **34** of the annular wall **22.** The edge **34** may be curved. Edge **34** may be spaced from the inner surface **18** of the first end portion **12.**

With reference to Figs. 5 and 6, in a basic second embodiment of the inner link plate **10,** wherein the second aperture **33** extends partially from the free end **24** of the second tubular extension **21** towards the inner surface **18** of the second end portion **14.** The second aperture **33** is extended partially along the length of the annular wall **22.** Second aperture **33** extends axially relative to the longitudinal axis **B.** The second aperture **33** may be substantially formed as a half circle. Second aperture **33** is defined by edge **34** of the annular wall **22.** The edge **34** may be curved. Edge **34** may be spaced from the inner surface **18** of the second end portion **14.**

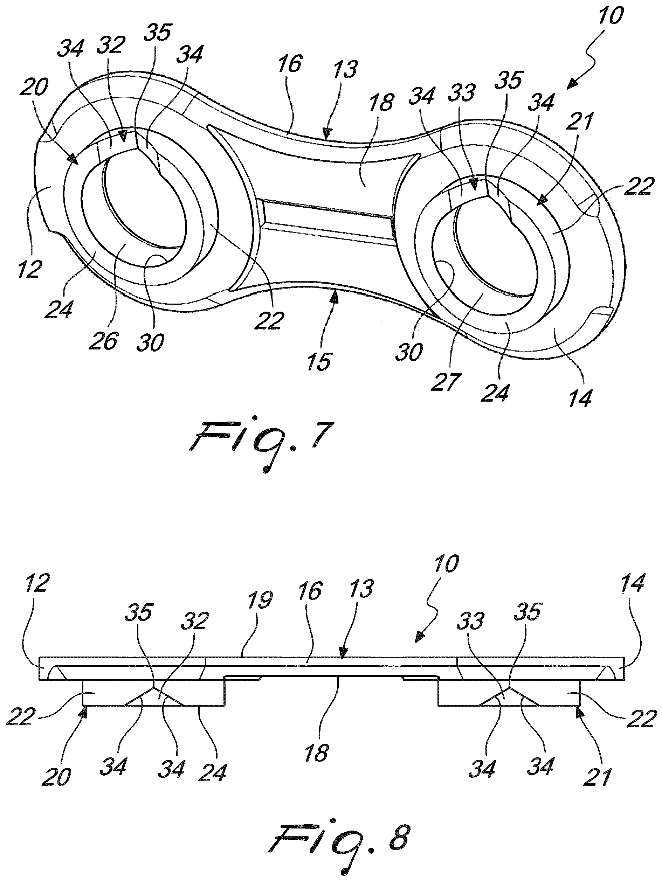

With reference to Figs. 7 and 8, in a third basic embodiment of the inner link plate **10,** the first aperture **32** extends partially from the free end **24** of the first tubular extension **20** towards the inner surface **18** of the first end portion **12.** The first aperture **32** is extended partially along the length of the annular wall **22.** First aperture **32** extends axially relative to the longitudinal axis **B.** The first aperture **32** may be substantially formed as a triangle. A triangular aperture is advantageous in terms dirt cleaning. Edges **34** may be linear and inclined. Edges **34** meet at an apex **35.** Apex **35** may be spaced from the inner surface **18** of the first end portion **12.**

With reference to Figs. 7 and 8, in a second basic embodiment of the inner link plate **10,** the second aperture **33** extends partially from the free end **24** of the second tubular extension **21** towards the inner surface **18** of the second end portion **14.** The second aperture **33** is extended partially along the length of the annular wall **22.** Second aperture **33** extends axially relative to the longitudinal axis **B.** The second aperture **33** may be substantially formed as a triangle. A triangular aperture is advantageous in terms dirt cleaning. Edges **34** meet at an apex **35.** Apex **35** may be spaced from the inner surface **18** of the second end portion **14.**

In a further embodiment, which is not shown in the figures, the first aperture **32** is positioned between the free end **24** and the inner surface **18** of the first end portion **12.** First aperture **32** is enclosed by the edge **34.** The first aperture **32** may be formed in any required shape. First aperture **32** may be centrally positioned in the first tubular extension **20.**

In a further embodiment, which is not shown in the figures, the second aperture **33** is positioned between the free end **24** and the inner surface **18** of the second end portion **14.** Second aperture **33** is enclosed by the edge **34.** The second aperture **32** may be formed in any required shape. Second aperture **33** may be centrally positioned in the second tubular extension **21.**

In yet a further embodiment, which is not shown in the figures, the first aperture **32** extends partially from the inner surface **18** of the first end portion **12** towards the free end **24** of the first tubular extension **20.** The first aperture **32** is extended partially along the length of the annular wall **22.** First aperture **32** extends axially relative to the longitudinal axis **B.** First aperture **32** is defined by edge **34/** or edges **34** of the annular wall **22.** The edge **34/** edges **34** may be spaced from the free end **24.**

In yet a further embodiment, which is not shown in the figures, the second aperture **33** extends partially from the inner surface **18** of the second end portion **14** towards the free end **24** of the second tubular extension **21.** The second aperture **33** is extended partially along the length of the annular wall **22.** Second aperture **33** extends axially relative to the longitudinal axis **B.** Second aperture **33** is defined by edge **34/** or edges **34** of the annular wall **22.** The edge **34/** edges **34** may be spaced from the free end **24.**

The first and second aperture **32, 33** each has preferably a maximum axial extension of between 0.2 mm to 1 mm. The axial extension is the straight-line distance from the free end **24** to the bottom of an aperture extending parallel to the longitudinal axes **B** of the respective first or second tubular extensions **20, 21.** Most preferably, the axial extension of each aperture **32, 33** is up to the inner surface **18** of the inner link plate **10.** It should be noted that inner link plates of modern chains have typically a thickness in the order of 0.8 mm and tubular extensions in the order of 0.9 mm. The axial extension of the first and second aperture **32, 33,** of the second basic embodiment, is the diameter of the half circle. The axial extension of the first and second aperture **32, 33,** of the third basic embodiment, is the vertical height of the triangle measured from a base, in line with the free end **24,** to the apex **35.**

The first and second aperture **32, 33** each has preferably a maximum transverse extension of less than 3.7 mm, more preferably less than 2 mm and most preferably between 0.5 mm to 1.5 mm. The transverse extension is the straight-line distance between opposite the edges **34** of the of the annular wall **22** in a direction substantially perpendicular to the respective longitudinal axes **B** of the respective first or second tubular extension **20, 21.** The transverse extension of the first and second aperture **32, 33,** of the first basic embodiment, is the straight-line distance between opposite the edges **34** of the of the annular wall **22.** The transverse extension of the first and second aperture **32, 33,** of the second basic embodiment, is the straight-line distance between opposite ends, at the free end **24,** of the edge **34** of the annular wall **22.** The transverse distance of the first and second aperture **32, 33,** of the third basic embodiment, is the straight-line distance between respective ends of the edges **34** of the annular wall **22,** at the free end **24.**

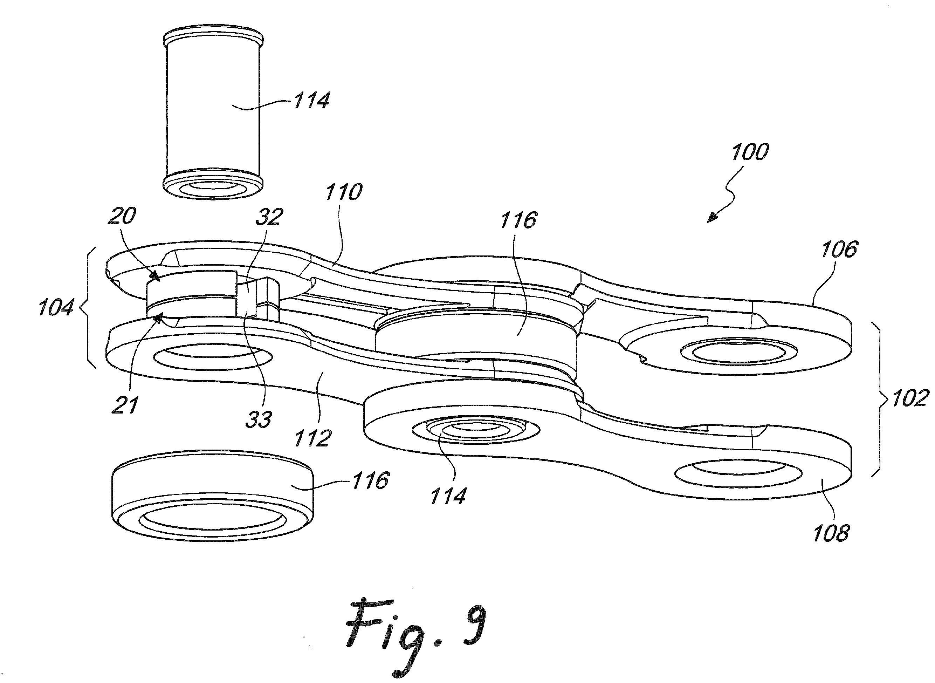

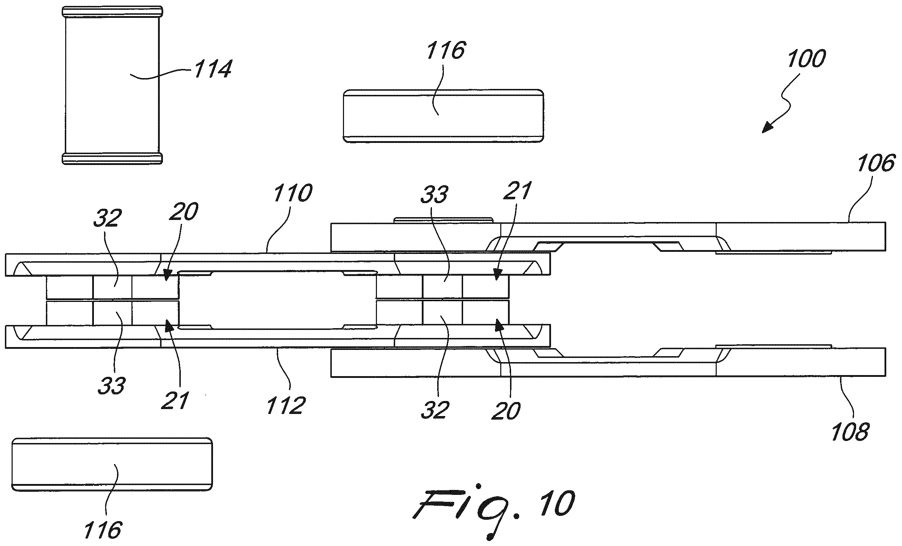

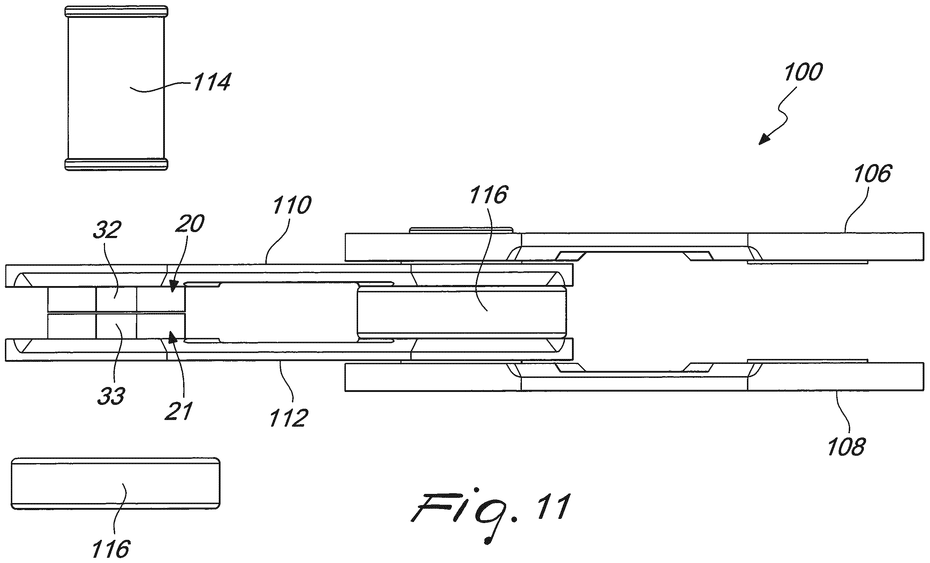

Figs. 9 to 11 illustrate a portion of a roller chain **100.** The present disclosure is further direction to a roller chain **100.** The roller chain **100** comprises a plurality of outer chain links **102** having first and second outer link plates **106, 108.** The first and second outer link plates **106, 108** are of the known type. The roller chain **100** comprises a plurality of inner chain links **104** having a first inner link plate **110** and a second inner link plate **112.** The first inner link plate **110** being the inner link plate **10** as herein disclosed. The roller chain **100** further comprises a plurality of pins **114** connecting the first and second outer link plates **106, 108** to the first and second inner link plates **110, 112.** The roller chain **100** further may comprise a plurality of rollers **116** supported on the plurality of pins **114.** The pins **114** and the rollers **114**, **116** are of the known type.

In an embodiment, the second inner link plate **112** is the inner link plate **10** as herein disclosed. The first and second apertures **32, 33** of the first inner link plate **112** are aligned to the second and first apertures **33, 32** of the second inner link plate **114.** The first and second apertures **32, 33** in the first and second inner link plates **110, 112** mutually communicate thereby presenting apertures of increased surface area.

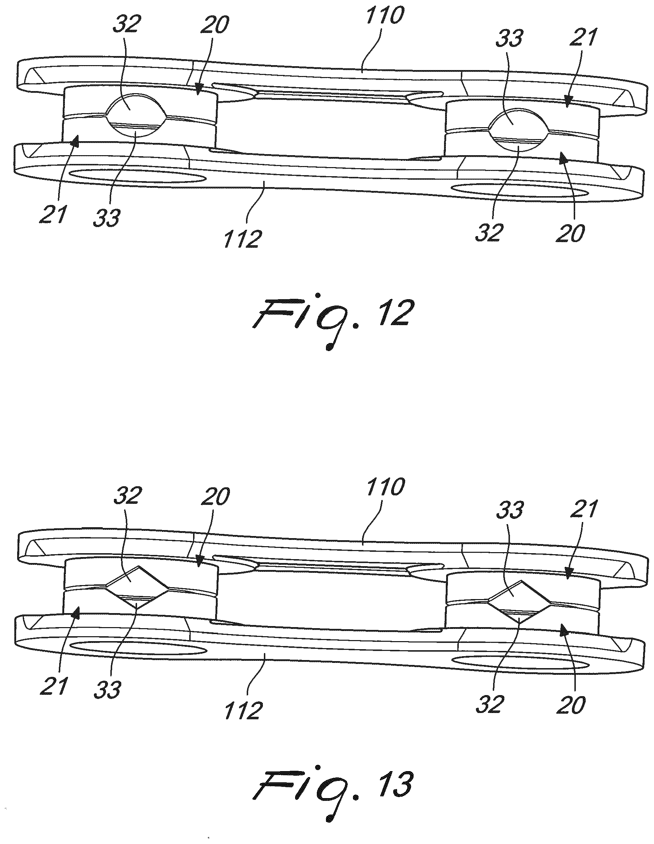

With reference to Figs. 9 to 11, in which the apertures correspond to the first basic embodiment, the first and second apertures **32, 33** are positioned so that the edges **34** of the respective annular walls **22** of the first and second inner link plates **110, 112** are aligned. Each grouping of the first and second apertures **32, 33** forms a rectangular shape. With reference to Fig. 12, in which the apertures correspond to the second basic embodiment, the first and second apertures **32, 33** are positioned so that ends of respective edges **34** in the annular walls **22** of the first and second inner link plates **110, 112** are aligned. Each grouping of first and second apertures **32, 33** forms a circular shape. With reference to Fig. 13, in which the apertures correspond to the third basic embodiment, the first and second apertures **32, 33** are positioned so that ends of respective inclined edges **34** in the annular walls **22** of the first and second inner link plates **110, 112** are aligned. Each grouping of first and second apertures **32, 33** forms a diamond shape. However, in alternative embodiments it is conceivable that the respective apertures of two opposing inner link plates are not aligned which may be advantageous in terms of a better load distribution as larger contiguous voids are avoided in the annular walls **22.**

In an alternate embodiment of the roller chain **100,** the second inner link plate **112** comprises a first end portion **12** having a first tubular extension **20** wherein a first pin coupling conduit **26** extends through the first tubular extension **20** and the first end portion **12;** a second end portion **14** having a second tubular extension **21** wherein a second pin coupling conduit **27** extends through the second tubular extension **21** and the second end portion **14;** and a connecting portion **16** interconnecting the first and second end portions **12, 14.**

The first and second tubular extensions **20, 21** of the second inner link plate **112** do not have necessarily apertures **32, 33.** The remaining features of the second inner link plate **112** are identical to the inner link pate **10** as herein disclosed.

The apertures **32, 33** of the first inner link plate **110,** in the first, second and third basic embodiments, are bound by the free edge **24** of the respective first and second tubular extensions **20, 21** in the second inner link plate **112.** In the embodiment of the first and second apertures **32, 33** bound in the respective first and second tubular extensions **20, 21,** the apertures **32, 33** of the first inner link plate **110** are spaced from the free edge **24** of the respective first and second tubular extensions **20, 21** in the second inner link plate **112.** In the embodiment of the first and second apertures **32, 33** extending from the inner surface **18** in the respective first and second tubular extensions **20, 21,** the apertures **32, 33** of the first inner link plate **110** are spaced from the free edge **24** of the respective first and second tubular extensions **20, 21** in the second inner link plate **112.**

In an alternate embodiment of the roller chain **100,** the second inner link plate **112** comprises a first end portion **12** having a first pin coupling opening 28; a second end portion **14** having a second pin coupling opening **28;** and a connecting portion **16** interconnecting the first and second end portions **12, 14.**

The first and second tubular extensions **20, 21** of the second inner link plate **112** do not have first and second tubular extensions **20, 21.** The remaining features of the second inner link plate **112** are identical to the inner link pate **10** as herein disclosed. The apertures **32, 33** of the first inner link plate **110,** in the first, second and third basic embodiments, are bound by the inner surface **18** of second inner link plate **112.** In the embodiment of the first and second apertures **32, 33** bound in the respective first and second tubular extensions **20, 21,** the apertures **32, 33** of the first inner link plate **110** are spaced from the inner surface **18** of second inner link plate **112.** In the embodiment of the first and second apertures **32, 33** extending from the inner surface **18** in the respective first and second tubular extensions **20, 21,** the apertures **32, 33** of the first inner link plate **110** are spaced from the inner surface **18** of second inner link plate **112.**

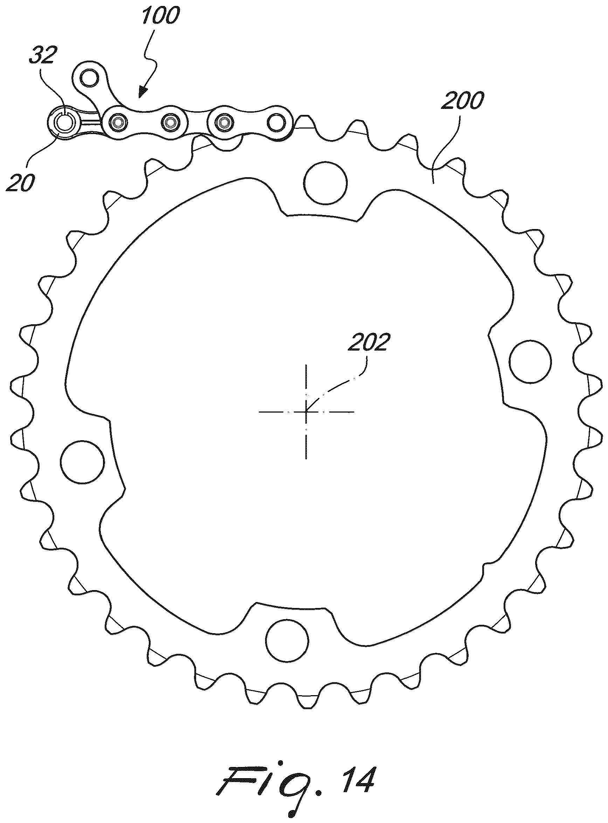

According to an aspect of the present disclosure and with reference to Fig. 14, a bicycle comprises a chainring **200** having a rotational axis **202;** and the roller chain **100** wherein the first and second apertures **32, 33** face away from the rotational axis **202** of the chainring **200.** The first and second apertures **32, 33** in the first and the second inner link plates **110, 112** face away from the rotational axis **202** of the chainring **200.**

The skilled person would appreciate that foregoing embodiments may be modified or combined to obtain the inner link plate **10** of the present disclosure.

### Industrial Applicability

This disclosure describes an inner link plate **10** for a roller chain **100,** such as a bicycle chain. The inner link plate **10** reduces the wear on the inner side of the first and second tubular extensions **20, 21** as a result of friction with the pin **114.** The first and second apertures **32, 33** in the inner link plate **10** enables improved lubricant penetration around the pin **114.** The first and second apertures **32, 33** allow lubricant to move into the space between the pin **114** and the inner side of the first and second tubular extensions **20, 21.**

The inner link plate **10** with apertures **32, 33** enables also easy removal of debris during operation in wet gritty environments. The first and second apertures **32, 33** also allow the removal of dirt contaminated lubricant and the penetration of new lubricant. Drip type lubricants from a bottle, especially wax based lubricants almost never penetrate well to the pin with prior art link design. And once they finally do after many lube applications they usually remain there over a long period of time to form a paste with dirt which hugely accelerates chain wear by wearing the pin and tubular extensions on inner link plate. According to the present invention, the dirt contaminated lubricant is expelled through the first and second apertures **32, 33.**

Accordingly, this disclosure includes all modifications and equivalents of the subject matter recited in the claims appended hereto as permitted by applicable law. Moreover, any combination of the above-described elements in all possible variations thereof is encompassed by the disclosure unless otherwise indicated herein.

Where technical features mentioned in any claim are followed by reference signs, the reference signs have been included for the sole purpose of increasing the intelligibility of the claims and accordingly, neither the reference signs nor their absence have any limiting effect on the technical features as described above or on the scope of any claim elements.

One skilled in the art will realise the disclosure may be embodied in other specific forms without departing from the disclosure or essential characteristics thereof. The foregoing embodiments are therefore to be considered in all respects illustrative rather than limiting of the disclosure described herein. Scope of the invention is thus indicated by the appended claims, rather than the foregoing description, and all changes that come within the meaning and range of equivalence of the claims are therefore intended to be embraced therein.

In particular, according to a further aspect of the present invention a roller chain is provided, the roller chain comprising:
a plurality of outer chain links each having a first and a second outer link plate;
a plurality of inner chain links each having a first inner link plate and a second inner link plate; and
a plurality of pins connecting the first and second outer link plates to the first and second inner link plates,
wherein at least one inner link plate comprises:
   a first end portion having a first tubular extension extending from an inner surface of the inner link plate, the first tubular extension defining at its inner side a first pin coupling conduit extending through the first tubular extension and the first end portion, the first tubular extension having a first aperture;
   a second end portion having a second tubular extension extending from the inner surface of the inner link plate, the second tubular extension defining at its inner side a second pin coupling conduit extending through the second tubular extension and the second end portion, the second tubular extension having a second aperture; and
   a connecting portion interconnecting the first and second end portions,
wherein the first aperture extends from a free end of the first tubular extension to the inner surface of the inner link plate and/or wherein the second aperture extends from a free end of the second tubular extension to the inner surface of the inner link plate.

The features of the above further aspect of the invention can be combined with all embodiments, in particular all embodiments claimed in the appended claims.

## Claims

1. A roller chain (100) comprising:
a plurality of outer chain links (102) each having a first and a second outer link plate (106, 108);
a plurality of inner chain links (104) each having a first inner link plate (10; 110) and a second inner link plate (10; 112); and
a plurality of pins (114) connecting the first and second outer link plates (106, 108) to the first and second inner link plates (110, 112),
wherein each inner link plate (10) comprises:
a first end portion (12) having a first tubular extension (20) extending from an inner surface (18) of the inner link plate (10), the first tubular extension (20) defining at its inner side a first pin coupling conduit (26) extending through the first tubular extension (20) and the first end portion (12), the first tubular extension (20) having a first aperture (32);
a second end portion (14) having a second tubular extension (21) extending from the inner surface (18) of the inner link plate (10), the second tubular extension (21) defining at its inner side a second pin coupling conduit (27) extending through the second tubular extension (21) and the second end portion (14), the second tubular extension (21) having a second aperture (31); and
a connecting portion (16) interconnecting the first and second end portions (12, 14),
wherein the first aperture (32) extends from a free end (24) of the first tubular extension (20) to the inner surface (18) of the inner link plate (10) and wherein the second aperture (33) extends from a free end (24) of the second tubular extension (21) to the inner surface (18) of the inner link plate (10).

2. The roller chain (100) of claim 1, wherein the inner link plate (10) has a first lateral edge (13) extending along a side of the first and second end portions (12, 14) and the connecting portion (16) and a second lateral edge (15) extending along an opposite side of the first and second end portions (12, 14) and the connecting portion (16) and wherein the first aperture (32) and/or the second aperture (33) open towards a one of the lateral edges (13, 15).

3. The roller chain (100) of claims 1 or 2, wherein the first and second apertures (32, 33) face the same direction.

4. The roller chain (100) of one or more of the preceding claims, wherein the first and/or the second aperture (31, 32) have a shape, as seen from the longitudinal axis (B) of the first or second tubular extensions (20, 21), which is selected from rectangular, triangular or half circle.

5. The roller chain (100) of one or more of the preceding claims, wherein the first and/or the second aperture (32, 33) has a maximum axial extension of between about 0.2 mm to about 1 mm.

6. The roller chain (100) of one or more of the preceding claims, wherein the first and/or the second aperture (32, 33) has a maximum transverse extension of less than about 3.7 mm, preferably less than about 2 mm, and most preferably between about 0.5 mm to about 1.5 mm.

7. The roller chain (100) of one or more of the preceding claims, wherein the first pin coupling conduit (26) has a first opening (28) provided at an outer surface (19) of the inner link plate (10) which is opposite to the first inner surface (18) of the inner link plate (10) and a second opening (30) provided at the free end (24) of the first tubular extension (20) and/or wherein the second pin coupling conduit (27) has a first opening (28) provided at the outer surface (19) of the inner link plate (10) which is opposite to the first inner surface (18) of the inner link plate (10) and a second opening (30) provided at the free end (24) of the second tubular extension (21).

8. The roller chain (100) of claim 7, wherein the diameter of the first and second openings (28, 30) is equal to the diameter of the first pin coupling conduit (26) and or the second pin coupling conduit (27).

9. The roller chain (100) of any one of the preceding claims 1 to 8, wherein the first and second apertures (32, 33) of the first inner link plate (110) are aligned to the second and first apertures (33, 32) of the second inner link plate (112).

10. The roller chain (100) of any one of the preceding claims 1 to 8, wherein the first and second apertures (32, 33) of the first inner link plate (110) are spaced from the second and first apertures (33, 32) of the second inner link plate (112).

11. A bicycle comprising:
a chainring (200) having a rotational axis (202); and
the roller chain (100) of any one of claims 1 to 10, wherein the first and second apertures (32, 33) face away from the rotational axis (202) of the chainring (200).
